(19) Europäisches Patentamt
European Patent Office
Office européen des brevets

(11) **EP 1 104 232 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.03.2010 Patentblatt 2010/11**

(45) Hinweis auf die Patenterteilung:
**04.05.2005 Patentblatt 2005/18**

(21) Anmeldenummer: **99931260.6**

(22) Anmeldetag: **08.07.1999**

(51) Int Cl.:
***A01N 1/00*** (2006.01)

(86) Internationale Anmeldenummer:
**PCT/EP1999/004788**

(87) Internationale Veröffentlichungsnummer:
**WO 2000/003591 (27.01.2000 Gazette 2000/04)**

(54) **HERBIZIDE MITTEL**

HERBICIDES

HERBICIDES

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **16.07.1998 DE 19832017**
 **22.06.1999 DE 19928387**

(43) Veröffentlichungstag der Anmeldung:
**06.06.2001 Patentblatt 2001/23**

(73) Patentinhaber: **Bayer CropScience AG**
**40789 Monheim (DE)**

(72) Erfinder:
- **HACKER, Erwin**
 **D-65239 Hochheim (DE)**
- **BIERINGER, Hermann**
 **D-65817 Eppstein (DE)**
- **AULER, Thomas**
 **D-65451 Kelsterbach (DE)**
- **MELENDEZ, Alvaro**
 **D-65824 Schwalbach (DE)**

(56) Entgegenhaltungen:
| | |
|---|---|
| EP-A- 0 004 414 | EP-A- 0 043 802 |
| EP-A- 0 049 397 | EP-A- 0 293 062 |
| EP-A- 0 482 491 | WO-A-91/05469 |
| WO-A-92/16101 | WO-A-94/09629 |
| WO-A-97/10710 | WO-A-97/10714 |
| WO-A-98/33383 | DE-A- 3 415 069 |
| DE-A- 3 536 035 | DE-A- 4 236 475 |
| DE-A- 19 534 910 | DE-A- 19 851 854 |
| GB-A- 2 137 092 | US-A- 4 904 295 |

- DATABASE CABA [Online] A.J.FISCHER ET AL.: "Yield loss prediction for intergrated weed management in direct-seeded rice" retrieved from STN Database accession no. 94:22013 CABA XP002119137 & INTERNATIONAL JOURNAL OF PEST MANAGEMENT, Bd. 39, Nr. 2, 1993, Seiten 175-180,
- DATABASE CHEMABS [Online] CHEMICAL ABSTRACTS SERVICE, COLUMBUS, OHIO, US M.W.BEALE ET AL.: "Preemergence and postemergence combinations in soybeans with some old and new herbicides" retrieved from STN-INTERNATIONAL, accession no. 100: 134192 XP002129783 & PROC.ANNU.MEET.NORTHEAST. WEED SCI. SOC., Nr. 38, 1984, Seite 54-60
- DATABASE CHEMABS [Online] CHEMICAL ABSTRACTS SERVICE, COLUMBUS, OHIO, US J.E.JOHNSON ET AL.: "Effects of chemical site preparation on red pine seedling survival and growth" retrieved from STN-INTERNATIONAL, accession no. 105:92868 XP002129784 & PROC. -NORTH CENT. WEED CONTROL CONF., Nr. 40, 1985, Seiten 24-27,
- PATENT ABSTRACTS OF JAPAN vol. 4, no. 61 (C-009), 8. Mai 1980 (1980-05-08) & JP 55 028957 A (NIPPON SODA), 29. Februar 1980 (1980-02-29)
- DATABASE CHEMABS [Online] CHEMICAL ABSTRACTS SERVICE, COLUMBUS, OHIO, US R.L.RITTER ET AL.: "Influence of herbicides and tillage on the control of triazine-resistant smooth pigweed (amaranthus hybridus) in corn (Zea mays) and soybeans (Glycine max)" retrieved from STN-INTERNATIONAL, accession no. 103: 18309 XP002129785 & WEED SCI., Bd. 33, Nr. 3, 1985, Seiten 400-404,

EP 1 104 232 B2

- **DATABASE CHEMABS [Online] CHEMICAL ABSTRACTS SERVICE, COLUMBUS, OHIO, US P.F.FIGUEROA: "First -year result of a herbicide screening trial in a newly established red alder plantation with 1 + 0 bare-root and plug seedling stock" retrieved from STN-INTERNATIONAL, accession no. 109:165643 XP002129786 & PROC. WEST. SOC. WEED SCI., Bd. 41, 1988, Seiten 108-124,**
- **DATABASE CHEMABS [Online] CHEMICAL ABSTRACTS SERVICE, COLUMBUS, OHIO, US M.DEFELICE ET AL.: "Weed control in soybeans (Glycine max) with reduced rates of postemergence herbicides" retrieved from STN-INTERNATIONAL, accession no. 111:52372 XP002129787 & WEED SCI. , Bd. 37, Nr. 3, 1989, Seiten 365-374,**
- **C.D.S. TOMLIN: 'The Pesticide Manual, A World Compendium', Bd. 13, 2003, BRITISH CROP PROTECTION COUNCIL, UK, ISBN 1901396134 Seite 1022**

Bemerkungen:

Die Akte enthält technische Angaben, die nach dem Eingang der Anmeldung eingereicht wurden und die nicht in dieser Patentschrift enthalten sind.

**Beschreibung**

Die Erfindung liegt auf dem technischen Gebiet der Pflanzenschutzmittel, die gegen Schadpflanzen in Pflanzenkulturen, vorzugsweise in Reis eingesetzt werden können und als Herbizidwirkstoffe eine Kombination von mindestens zwei Herbiziden enthalten, wobei eine Herbizidkomponente aus der Gruppe der Herbizide vom Typ der Fettsäurebiosynthesehemmer ausgewählt ist.

Eine Reihe von Verbindungen aus der Strukturklasse der Aryloxyphenoxypropionsäuren, Cyclohexandione und Derivate der genannten Verbindungen und deren Derivate sind als Herbizide vom Typ der Fettsäurebiosynthesehemmer bekannt. Ein Vorteil dieser Verbindungen ist ihre Wirksamkeit gegen Gräser, wobei ein selektiver Einsatz, gegebenenfalls in Kombination mit Safenem, auch in monokotylen Pflanzenkulturen möglich ist und genutzt wird.

Die Wirksamkeit dieser Herbizide gegen Schadpflanzen in den Pflanzenkulturen liegt auf einem hohen Niveau, hängt jedoch im allgemeinen der Aufwandmenge, der jeweiligen Zubereitungsform, den jeweils zu bekämpfenden Schadpflanzen oder dem Schadpflanzenspektrum, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbzide oder geographisch begrenzt auftreten können. Wirkungsverluste bei einzelnen Pflanzen lassen sich nur bedingt durch höhere Aufwandmengen der Herbizide ausgleichen, z. B. weil damit häufig die Selektivität der Herbizide verschlechtert wird oder eine Wirkungsverbesserung auch bei höhere Aufwandmenge nicht eintritt. Teilweise kann die Selektivität in Kulturen durch Zusatz von Safenern verbessert werden. Generell besteht jedoch immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität in einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

In EP-A-0043802 sind synergistische herbizide Mittel für den Einsatz in Getreide beschrieben, welche einen Pyridyloxyphenoxypropionsaäureester in Kombination mit einem Herbizid aus der Gruppe Chlortoluron, Metoxuron, Isoproturon, Methabenzthiazuron, loxynil und Bromophenoxim enthält.

GB-A-2137092 betrifft synergistische herbizide Mittel für den Einsatz im Reis, wobei verschiedenen Heteroaryloxyphenoxypropionat-Herbizide in Kombination mit Herbiziden vom Auxintyp wie MCPA, 2,4-D, 2,4-DB, MCPB, 2,4,5-T, Mecoprop oder Dichlorprop enthalten sein können. Als Beispiele sind insbesondere Fluazifop-butyl in Kombination mit MCPA, 2,4-D oder Mecoprop genannt.

Aus WO-A-91/05469 sind bereits Herbizidkombinationen für den Einsatz in Kulturen wie beispielsweise Getreide, Mais und Reis bekannt, wobei Herbizide vom Typ der Benzoylcyclohexandione (HPPDO Inhibitoren) mit Herbiziden anderen Strukturtyps kombiniert werden.

Überraschenderweise wurde nun gefunden, daß Wirkstoffe aus den anfangs genannten Herbizidklassen in Kombination mit bestimmten strukturell anderen Herbiziden in besonders günstiger Weise zusammenwirken, wenn sie in Reiskulturen gegen Schadpflanzen eingesetzt werden. Der Einsatz gilt vorzugsweise für Reiskulturen, die gegen die Anwendung der Herbizide, gegebenenfalls unter Zusatz von Safenern, weitgehend tolerant sind. Mit der Einführung von toleranten oder resistenten Reissorten und -linien, insbesondere von transgenen Reissorten und -linien, wird das herkömmliche Unkrautbekämpfungssystem um neue, per se in herkömmlichen Reissorten nichtselektive Wirkstoffe ergänzt.

Die erfindungsgemäßen Kombinationen sind darüberhinaus häufig auch zur Bekämpfung gleicher Schadpflanzen in anderen Kulturen geeignet.

Gegenstand der Erfindung sind somit Herbizid-Kombinationen mit einem wirksamen Gehalt an Komponenten (A) und (B), wobei

(A) ein Herbizid aus der Gruppe, bestehend aus Heteroaryloxy- und Aryloxy-phenoxypropionsäuren und deren Salzen und Ester und Cyclohexandionen (A1.1) bis (A1.7) und (A2.1) bis (A2.4)

(A1.1) Fenoxaprop-P und dessen Ester und Fenoxaprop und dessen Ester,
(A1.2) Quizalofop-P und dessen Ester und Quizalofop und dessen Ester,
(A1.3) Propaquizafop,

(A1.4) Fluazifop-P und dessen Ester und Fluazifop und dessen Butylester,
(A1.6) Cyhalofop und dessen Ester,
(A1.7) Clodinafop und dessen Ester
(A2.2) Cycloxydim,
(A2.3) Clethodim und
(A2.4) Clefoxydim, bedeutet

und

(B) ein Herbizid aus der Gruppe der Verbindungen bedeutet, welche aus

(B1) selektiv in Reis besonders gegen monokotyle Schadpflanzen wirksame Herbizide aus der Gruppe (B1.1) Butachlor und

(B2) selektiv in Reis vorwiegend gegen dikotyle Schadpflanzen und Cyperaceen wirksame Herbizide aus der Gruppe

(B2.3) Picloram und dessen Salze

- wobei im Falle des Wirkstoffs (A1.3), (A1.4), (A1.6), (A2.2), (A2.3) oder (A2.4) als herbizider Kombinationswirkstoff der Gruppe (B2) auch

(B2.9) Chlorimuron und dessen Ester,
(B2.10) Triasulfuron und
(B2.11) Ioxynil und dessen Ester und Salze

in Frage kommen,
besteht.

Die erfindungsgemäßen Herbizid-Kombinationen können weitere Komponenten enthalten, z. B. andere Herbizide, Insektizide, Fungizide, Akarizide, Pflanzenschutzmittelwirkstoffe anderer Art (z. B. Safener), Pflanzenwachstumsregulatoren und/oder im Pflanzenschutz übliche Zusatzstoffe und/oder Formulierungshilfsmitteln. Die Komponenten können dabei gemeinsam formuliert (Fertigformulierung) und angewendet werden oder sie können getrennt formuliert und gemeinsam angewendet werden, z. B. im Tank-Mix oder in sequentieller Applikation.

Die synergistischen Wirkungen werden bei gemeinsamer Ausbringung der Wirkstoffe (A) und (B) beobachtet, können jedoch auch häufig auch bei zeitlich versetzter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Mit dem kombinierten Einsatz der Herbizide (A) und (B) werden anwendungstechnische Eigenschaften erreicht, die über das hinausgehen, was aufgrund der bekannten Eigenschaften der Einzelherbizide für deren Kombination zu erwarten war. Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten von Schadpflanzen (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Als Kombinationspartner (A) kommen beispielsweise folgende Verbindungen (A1) und (A2) in Frage, die jeweils alleine oder in Kombination untereinander eingesetzt werden können (die Bezeichnung der Herbizide erfolgt weitgehend mit dem üblichen Namen für den Wirkstoff ("common name") nach der Referenzstelle "The Pesticide Manual" 11th Ed., British Crop Protection Council 1997, abgekürzt "PM"):

(A1) Herbizide aus der Gruppe der (Hetero)Aryloxyphenoxypropionsäuren und deren Derivaten, die gegen monokotyle Schadpflanzen vor allem über das Blatt wirksam sind und, gegebenenfalls in Kombination mit geeigneten Safenerwirkstoffen, selektiv in Reis eingesetzt werden können, beispielsweise

(A1.1) "Fenoxaprop-P" und dessen Ester wie der Ethylester "Fenoxaprop-P-ethyl" (siehe PM, S. 519-520) (= (R)-2-[4-(6-Chlor-benzoxyzolyl-2-yloxy)-phenoxy]-propionsäure bzw. -ethylester), auch in der Anwendungsform des Razemats "Fenoxaprop" und dessen Ester wie der Ethylester, und/oder

(A1.2) "Quizalofop-P" und dessen Ester wie der Ethyl- oder Tefurylester (siehe PM, S. 1089-1092) (= (R)-2-[4-(6-Chlor-quinoxalin-2-yloxy)-phenoxy]-propionsäure bzw. -ethylester bzw. -tetrahydrofurfurylester), auch in der Form des Razemats "Quizalofop" und dessen Ester; vgl. auch als speziellen Ester "Propaquizafop" (Verbindung A1.3), und/oder

(A1.3) "Propaquizafop" (PM, S. 1021-1022), der 2-Isopropylidenaminooxyethylester von Quizalofop-P und/oder (A1.4) "Fluazifop-P" und dessen Ester wie der Butylester (siehe PM, S. 556-557) (= (R)-2-[4-(5-Trifluormethyl-pyrid-2-yloxy)-phenoxy]-propionsäure bzw. -butylester), auch in der Anwendungsform des Razemats "Fluazifop" und dessen Ester, und/oder

(A1.6) "Cyhalofop" und dessen Ester wie der Butylester (PM, S. 297-298) (= (R)-2-[4-(4-Cyano-2-fluor-phenoxy)-phenoxy]-propionsäure bzw. -butylester) und/oder

(A1.7) "Clodinafop" und dessen Ester wie der Propargylester (PM, S. 251-252) (= (R)-2-[4-(5-Chlor-3-fluor-pyrid-2-yloxy)-phenoxy]-propionsäure bzw. - propargylester).

(A2) Herbizide aus der Gruppe der Cyclohexandione, die gegen monokotyle Schadpflanzen über das Blatt und den Boden wirksam sind und selektiv in Reis eingesetzt werden können, beispielsweise

(A2.2) "Cycloxydim" (PM, S. 290-291) (= (RS)-2-(1-Ethoxyiminobutyl)-5-[5-(ethylthio)-propyl]-3-hydroxy-5-thian-3-yl-cyclohexen-2-enon) und/oder

(A2.3) "Clethodim" (PM, S. 250-251) (= (RS)-2-{(E)-1-[(E)-3-Chlorallyloxyimino]propyl}-5-[2-(ethylthio)-propyl]-3-hydroxy-cyclohexen-2-enon).

(A2.4) "Clefoxidim" oder "BAS 625 H" (siehe AG Chem New Compound Review, Vol. 17, 1999, S. 26, herausgegeben von AGRANOVA) (= 2-[1-2-(4-Chlorphenoxy)-propoxyimino)-butyl]-3-oxo-5-thion-3-yl-cyclohex-1-enol),

Die Aufwandmengen der Herbizide (A) sind im Prinzip bekannt und liegen im für die Herbizide vom Typ (A1) im Bereich von 5 g bis 500 g Aktivsubstanz pro Hektar und für die Herbizide vom Typ (A2) im Bereich von 10 g bis 1000 g Aktivsubstanz pro Hektar. In den erfindungsgemäßen Mischungen werden im Rahmen der genannten Aufwandmengen im Vergleich zur Einzelapplikation niedrigere Aufwandmengen des jeweiligen Wirkstoffs benötigt.

Als Kombinationspartner (B) kommen beispielsweise folgende von den Verbindungen (A) unterschiedliche Verbindungen der Untergruppen (B1) bis (B2) in Frage (die Bezeichnung der Herbizide erfolgt weitgehend mit dem "common name" nach der Referenzstelle "The Pesticide Manual" 11th Ed., British Crop Protection Council 1997, abgekürzt "PM"):

(B1) Selektiv in Reis besonders gegen monokotyle Schadpflanzen wirksame Herbizide aus der Gruppe

(B1.1) Butachlor (PM, S. 159-160) (= N-(Butoxymethyl)-2-chlor-N-(2,6-diethylphenyl)-acetamid,

Besonders bevorzugt sind erfindungsgemäße Herbizid-Kombinationen (A)+(B1), welche folgende Wirkstoffe enthalten:

**(A1.1)+(B1.1).**

Dabei ist als Verbindung (A1.1) jeweils Fenoxaprop-P-ethyl bevorzugt.

Die jeweils zur gleichen chemischen Klasse gehörenden Wirkstoffe bilden in der Gruppe (B1) und den weiter unten erläuterten Gruppen (B2) bis (B4) jeweils bevorzugte Untergruppen, weil sie sich in einigen anwendungstechnischen Eigenschaften besonders ähnlich sind.

(B2) Selektiv in Reis vorwiegend gegen dikotyle Schadpflanzen und Cyperaceen wirksame Herbizide sind z. B. eine oder mehrere Verbindungen aus der Gruppe

(B2.3) Picloram (PM, S. 977-979) (= 4-Amino-3,5,6-trichlorpyridin-2-carbonsäure) und dessen Salze, wie das Kaliumsalz, und

- wobei im Falle des Wirkstoffs (A1.3), (A1.4), (A1.6), (A2.2), (A2.3) oder (A2.4) als herbizider Kombinationswirkstoff der Gruppe (B2) auch

(B2.9) Chlorimuron und dessen Ester wie Chlorimuron-ethyl (PM, S. 217-218) (= 2-(4-Chlor-2-methoxypyrimidin-2-ylcarbamoylsulfamoyl)-benzoesäure bzw. deren Ester wie der Ethylester),

(B2.10) Triasulfuron (PM, S. 1222-1224) (= 1-[2-(2-Chlorethoxy)-phenylsulfonyl]-3-(4-methoxy-6-methyl-1,3,5-triazin-2-yl)-harnstoff) und

(B2.11) loxynil (PM S. 718-721) (= 4-Hydroxy-3,5-diiodbenzonitril) und dessen Ester und Salze

in Frage kommen.

Besonders bevorzugt sind erfindungsgemäße Herbizid-Kombinationen (A)+(B2), welche folgende Wirkstoffe enthalten:

(A1.1)+(B2.3). Dabei ist als Verbindung (A1.1) jeweils Fenoxaprop-P-ethyl bevorzugt.

Wenn die Kurzform des "common name" verwendet wird, so sind damit alle gängigen Derivate, wie die Ester und Salze umfaßt, insbesondere die handelsübliche Form bzw. Formen. Bei Sulfonylharnstoffen sind mit Salzen auch die umfaßt, die durch Austausch eines Wasserstoffatoms an der Sulfonamidgruppe durch ein Kation entstehen.

Die Aufwandmengen der Herbizide (B) sind im Prinzip bekannt und liegen in der Regel im Bereich von 1 g bis 5000 gAS/ha (gAS/ha = g Aktivsubstanz pro Hektar). Vorzugsweise werden Verbindungen (B) eingesetzt:

(B1) in Mengen von 10 bis 4000, insbesondere 50-1000 gAS/ha,
(B2.3), in Mengen von 5 bis 1000, insbesondere 10-500 gAS/ha,
(B2.9-B2.10) in Mengen von 1 bis 50, insbesondere 4-20 gAS/ha;
(B2.11) in Mengen von 1 bis 2000, insbesondere 5 bis 1000 gAS/ha;

In den erfindungsgemäßen Mischung werden im Rahmen der genannten Aufwandmengen im Vergleich zur Einzelapplikation niedrigere Aufwandmengen des jeweiligen Wirkstoffs benötigt. Die Mengenverhältnisse (A):(B) liegen in Abhängigkeit von den wirksamen Aufwandmengen in der Regel im Bereich von 1:200 bis 200:1, vorzugsweise 1:100 bis 100:1, insbesondere im Bereich von 1:50 bis 50:1.

Bevorzugt sind Herbizid-Kombinationen aus einer Verbindung (A) mit einer strukturell anderen Verbindung der Gruppe (B1) oder (B2).

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.

Zusatzstoffe sind beispielsweise Düngemittel und Farbstoffe. Von besonderer Bedeutung sind dabei solche Kombinationen, denen noch ein oder mehrere weitere Wirkstoffe anderer Struktur oder Safenerwirkstoffe [Wirkstoffe (C)] zugesetzt werden wie beispielsweise nach dem Schema

$$(A)+(B1)+(C) \text{ oder } (A)+(B2)+(C).$$

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

In einigen Fällen sind schon Kombinationen unterschiedlicher Wirkstoffe innerhalb der Gruppe (A) synergistisch, so daß auf Basis dieser Zweierkombinationen besonders günstige Dreierkombinationen mit zusätzlich synergistischen Effekten möglich sind.

Die Wirkstoffe (A) sind zur Bekämpfung des Unkrautspektrums in Reiskulturen, beispielsweise von verpflanztem oder gesätem Reis, geeignet. Darüberhinaus können sie gegebenenfalls zur Bekämpfung der Schadpflanzen in anderen Kulturen, beispielsweise in wirtschaftlich bedeutenden Kulturen wie Getreide (Weizen, Gerste, Roggen, Mais), Zuckerrübe, Zuckerrohr, Raps, Baumwolle und Soja eingesetzt werden. Bei Anwendung der Wirkstoffe (A) und (B) in Pflanzenkulturen wie Reiskulturen ist es je nach Pflanzenkultur zweckmäßig, ab bestimmter Aufwandmengen einen Safener zu applizieren, um Schäden an der Kulturpflanze zu reduzieren oder zu vermeiden. Folgende Gruppen von Verbindungen sind beispielsweise als Safener für die oben erwähnten herbiziden Wirkstoffe (A) geeignet:

a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (S1-1) ("Mefenpyr-diethyl", PM, S. 781-782), und verwandte Verbindungen, wie sie in der WO 91/07874 beschrieben sind,

b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind.

c) Verbindungen vom Typ der Triazolcarbonsäuren, vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-6), und verwandte Verbindungen EP-A-174 562 und EP-A-346 620);

d) Verbindungen vom Typ der 5-Benzyl- oder 5-Phenyl-2-isoxazolin-3-carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolincarbonsäureethylester (S1-9) ("Isoxadifen-ethyl") oder -n-propylester (S1-10) oder der 5-(4-Fluorphenyl)-5-phenyl-2-isoxazolin-3-carbonsäureethylester (S1-11), wie sie in der deutschen Patentanmeldung (WO-A-95/07897) beschrieben sind.

e) Verbindungen vom Typ der 8-Chinolinoxyessigsäure (S2), vorzugsweise (5-Chlor-8-chinolinoxy)-essigsäure-(1-methyl-hex-1-yl)-ester (Common name "Cloquintocet-mexyl" (S2-1) (siehe PM, S. 263-264) (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chlor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind.

f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.

g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba).

Für Wirkstoffe der Gruppe (B) sind die obengenannten Safener vielfach ebenfalls geeignet. Darüberhinaus eignen sich folgende Safener für die erfindungsgemäßen Herbizid-Kombinationen in Reis und anderen Getreidekulturen wie z. B. Weizen, Mais, Hirse etc.:

h) Wirkstoffe vom Typ der Pyrimidine, die als bodenwirksame Safener in Reis angewendet werden, wie z. B. "Fenclorim" (PM, S. 512-511) (= 4,6-Dichlor-2-phenylpyrimidin), das als Safener für Pretilachlor in gesätem Reis bekannt ist,

i) Wirkstoffe vom Typ der Pyrimidine, die als bodenwirksame Safener in Reis angewendet werden, wie z. B. "Fenclorim" (PM, S. 512-511) (= 4,6-Dichlor-2-phenylpyrimidin), das als Safener gegen Schäden von Pretilachlor in gesätem Reis bekannt ist,

j) Wirkstoffe vom Typ der Dichloracetamide, die häufig als Vorauflaufsafener (bodenwirksame Safener) angewendet werden, wie z. B. "Dichlormid" (PM, S. 363-364) (= N,N-Diallyl-2,2-dichloracetamid), "R-29148" (= 3-Dichloracetyl-2,2,5-trimethyl-1,3-oxazolidin von der Firma Stauffer),

"Benoxacor" (PM, S. 102-103) (= 4-Dichloracetyl-3,4-dihydro-3-methyl-2H-1,4-benzoxazin).

"PPG-1292" (= N-Allyl-N-[(1,3-dioxolan-2-yl)-methyl]-dichloracetamid von der Firma PPG Industries),

"DK-24" (= N-Allyl-N-[(allylaminocarbonyl)-methyl]-dichloracetamid von der Firma Sagro-Chem),

"AD-67" oder "MON 4660" (= 3-Dichloracetyl-1-oxa-3-aza-spiro[4,5]decan von der Firma Nitrokemia bzw. Monsanto),

"Diclonon" oder "BAS145138" oder "LAB145138" (= (= 3-Dichloracetyl-2,5,5-trimethyl-1,3-diazabicyclo[4.3.0]nonan von der Firma BASF) und

"Furilazol" oder "MON 13900" (siehe PM, 637-638) (= (RS)-3-Dichloracetyl-5-(2-furyl)-2,2-dimethyloxazolidin)

k) Wirkstoffe vom Typ der Dichloracetonderivate, wie z. B.

"MG 191" (CAS-Reg. Nr. 96420-72-3) (= 2-Dichlormethyl-2-methyl-1,3-dioxolan von der Firma Nitrokemia), das als Safener für Mais bekannt ist,

l) Wirkstoffe vom Typ der Oxyimino-Verbindungen, die als Saatbeizmittel bekannt sind, wie z. B.

"Oxabetrinil" (PM, S. 902-903) (= (Z)-1,3-Dioxolan-2-ylmethoxyimino(phenyl)acetonitril), das als Saatbeiz-Safener für Hirse gegen Schäden von Metolachlor bekannt ist,

"Fluxofenim" (PM, S. 613-614) (= 1-(4-Chlorphenyl)-2,2,2-trifluor-1-ethanon-O-(1,3-dioxolan-2-ylmethyl)-oxim, das als Saatbeiz-Safener für Hirse gegen Schäden von Metolachlor bekannt ist, und

"Cyometrinil" oder "-CGA-43089" (PM, S. 1304) (= (Z)-Cyanomethoxyimino(phenyl)acetonitril), das als Saatbeiz-Safener für Hirse gegen Schäden von Metolachlor bekannt ist,

m) Wirkstoffe vom Typ der Thiazolcarbonsäureester, die als Saatbeizmittel bekannt sind, wie z. B.

"Flurazol" (PM, S. 590-591) (= 2-Chlor-4-trifluormethyl-1,3-thiazol-5-carbonsäurebenzylester), das als Saatbeiz-Safener für Hirse gegen Schäden von Alachlor und Metolachlor bekannt ist,

n) Wirkstoffe vom Typ der Naphthalindicarbonsäurederivate, die als Saatbeizmittel bekannt sind, wie z. B.

"Naphthalic anhydrid" (PM, S. 1342) (= 1,8-Naphthalindicarbonsäureanhydrid), das als Saatbeiz-Safener für Mais gegen Schäden von Thiocarbamatherbiziden bekannt ist,

o) Wirkstoffe vom Typ Chromanessigsäurederivate, wie z. B.

"CL 304415" (CAS-Reg. Nr. 31541-57-8) (= 2-(4-Carboxy-chroman-4-yl)-essigsäure von der Firma American Cyanamid), das als Safener für Mais gegen Schäden von Imidazolinonen bekannt ist,

p) Wirkstoffe, die neben einer herbiziden Wirkung gegen Schadpflanzen auch Safenerwirkung an Kulturpflanzen wie Reis aufweisen, wie z. B. "Dimepiperate" oder "MY-93" (PM, S. 404-405) (= Piperidin-1-thiocarbonsäure-S-1-methyl-1-phenylethylester), das als Safener für Reis gegen Schäden des Herbizids Molinate bekannt ist,

"Daimuron" oder "SK 23" (PM, S. 330) (= 1-(1-Methyl-1-phenylethyl)-3-p-tolylharnstoff), das als Safener für Reis gegen Schäden des Herbizids Imazosulfuron bekannt ist,

"Cumyluron" = "JC-940" (= 3-(2-Chlorphenylmethyl)-1-(1-methyl-1-phenylethyl)-harnstoff, siehe JP-A-60087254), das als Safener für Reis gegen Schäden einiger Herbizide bekannt ist,

"Methoxyphenon" oder "NK 049" (= 3,3'-Dimethyl-4-methoxy-benzophenon), das als Safener für Reis gegen Schäden einiger Herbizide bekannt ist,

"CSB" (= 1-Brom-4-(chlormethylsulfonyl)-benzol) (CAS-Reg. Nr. 54091-06-4 von Kumiai), das als Safener gegen Schäden einiger Herbizide in Reis bekannt ist,

Von besonderem Interesse sind unter den genannten Safenem sind (S1-1), (S1-9) und (S2-1), insbesondere (S1-9).

Einige der Safener sind oben bereits als Herbizide genannt und entfalten somit neben der Herbizwirkung bei Schadpflanzen zugleich auch Schutzwirkung bei den Kulturpflanzen.

Weiterer Gegenstand der Erfindung sind folgenden spezifischen Zweier- und Mehrfachkombinationen mit Herbiziden und/oder Safenern:

Wirkstoff Fenoxaprop (A1.1) + Safener (S1-9) + Butachlor

Die genannten Mehrfachkombinationen weisen Synergien hinsichtlich der Herbizidwirkung und Selektivität und günstige Wirkung bezüglich des Unkrautspektums auf. Anstelle des Safeners (S1-9) können vielfach auch andere Safener eingesetzt werden, vorzugsweise die Safener der oben genannten Gruppen a) bis e).

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf, wie sie vorzugsweise in Reiskulturen vorkommen. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Echinochloa spp., Brachiaria spp., Leptochloa spp. und Digitaria spp. gut erfaßt, aber auch Panicum spp., Agropyron spp., Wildgetreideformen und Sorghum spp., Setaria spp., Alopecurus spp., Avena spp., Apera spica venti, Lolium spp., Phalaris spp. Cynodon spp., Poa spp. sowie Cyperusarten und Imperata.

Bei dikotylen Unkrautarten erstreckt sich das Wirkungsspektrum auf Arten wie z.B. Amaranthus spp., Sphenoclea spp., Heteranthera spp., Eleocharis spp., Ipomoea spp., Eschynomena spp., Sesbania spp. und Cyperrus spp. gut erfaßt, aber auch Polygonum spp., Xanthium spp., Equisetum, Chenopodium spp., Abutilon spp., Anthemis spp., Lamium spp., Matricaria spp., Stellaria spp., Kochia spp., Viola spp., Datura spp., Chrysanthemum spp., Thlaspi spp., Pharbitis spp., Sida spp., Sinapis spp., Cupsella spp., Ambrosia spp., Galium spp., Emex spp., Lamium spp., Papaver spp., Solanum spp., Cirsium spp., Veronica spp., Convolvulus spp., Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden kann, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen, wie Stickstoff oder Ölsäure, und deren Eintrag in den Boden reduziert.

Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Kombinationen eine ausgezeichnete herbizide Aktivität gegenüber mono- und dikotylen Unkräutern aufweisen, werden die Kulturpflanzne nur unwesentlich oder gar nicht geschädigt. Darüberhinaus weisen die erfindungsgemäßen Mittel teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Mittel zur Bekämpfung von Schadpflanzen in bekannten Pflanzenkulturen oder noch zu entwickelnden toleranten oder gentechnisch veränderten Kulturpflanzen eingesetzt werden. Die transgenen Pflanzen zeichnen sich in der Regel durch besondere vorteilhafte Eigenschaften aus, neben den Resistenzen gegenüber den erfindungsgemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, 'Trends in Plant Science" 1 (1996) 423-431).
Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs, vorzugsweise in Pflanzenkulturen, dadurch gekennzeichnet, daß man ein Herbizid des Typs (A) mit einem Herbizid des Typs (B) auf die Schadpflanzen, Pflanzenteile davon oder die Anbaufläche appliziert.

Gegenstand der Erfindung ist auch die Verwendung der neuen Kombinationen aus Verbindungen (A)+(B) zur Bekämpfung von Schadpflanzen, vorzugsweise in Pflanzenkulturen.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Ölin-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridgewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenem, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischem und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:
In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.
Staubförmige Formulierungen enthalten meistens 5 bis 20 Gew.-% an Wirkstoff, versprühbare Lösungen etwa 0,2 bis 25 Gew.-% Wirkstoff.
Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstoffformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfsstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277 C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,

10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

B. Biologische Beispiele

1. Unkrautwirkung im Vorauflauf

Samen bzw. Rhizomstücke von mono- und dikotylen Unkrautpflanzen werden in Töpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsern und Unkräutern auf.
Bonitur und Bewertung der synergistischen Herbizidwirkungen:
Die herbizide Wirksamkeit der Wirkstoffe bzw. Wirkstoffmischungen wurde anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Pflanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt.
Bei der Anwendung der erfindungsgemäßen Kombinationen werden häufig herbizide Wirkungen an einer Schadpflanzenspezies beobachtet, die die formale Summe der Wirkungen der enthaltenen Herbizide bei alleiniger Applikation übertreffen. Alternativ ist kann in manchen Fällen beobachtet werden, daß eine geringere Aufwandmenge für die Herbizid-Kombination benötigt wird, um im Vergleich zu den Einzelpräparaten dieselbe Wirkung bei einer Schadpflanzenspezies zu erzielen. Derartige Wirkungssteigerungen bzw. Effektivitätssteigerungen oder Einsparungen an Aufwandmenge sind ein starker Hinweis auf synergistische Wirkung. Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. in % bei a bzw. b g AS/ha; E = Erwartungswert in % bei a+b g AS/ha.
Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Töpfen in sandigem Lehmboden ausgelegt, mit Erde abgedeckt und im Gewächshaus unter guten Wachstumsbedingungen (Temperatur, Luftfeuchtigkeit, Wasserversorgung) angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.
Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuche)

Kulturpflanzen wurden im Freiland auf Parzellen unter natürlichen Freilandbedingungen herangezogen, wobei Samen oder Rhizomstücke von typischen Schadpflanzen ausgelegt worden waren bzw. die natürliche Verunkrautung genutzt wurde. Die Behandlung mit den erfindungsgemäßen Mitteln erfolgte nach dem Auflaufen der Schadpflanzen und der Kulturpflanzen in der Regel im 2 bis 4-Blattstadium; teilweise (wie angegeben) erfolgte die Applikation einzelner Wirkstoffe oder Wirkstoffkombinationen preemergent (vgl. Beispiel 1) oder als Sequenzbehandlung teilweise preemergent und/oder postemergent.
Nach der Anwendung, z. B. 2, 4, 6 und 8 Wochen nach Applikation die Wirkung der Präparate optisch im Vergleich zu unbehandelten Kontrollen bonitiert (vgl. Bonitur in Beispiel 1). Die erfindungsgemäßen Mittel weisen auch im Feldversuch eine synergistische herbizide Wirksamkeit gegen ein breites Spektrum wirtschaftlich wichtiger Ungräser und Unkräuter auf. Der Vergleich zeigte, daß die erfindungsgemäßen Kombinationen meist mehr, teilweise erheblich mehr herbizide Wirkung aufweisen als die Summe der Wirkungen der Einzelherbizide und weist deshalb auf einen Synergismus hin.
Außerdem lagen die Wirkungen in wesentlichen Abschnitten des Boniturzeitraums über den Erwartungswerten nach Colby (vgl. Bonitur in Beispiel 1) und weisen deshalb ebenfalls auf einen Synergismus hin. Die Kulturpflanzen dagegen wurden infolge der Behandlungen mit den herbiziden Mitteln nicht oder nur unwesentlich geschädigt.

Vergleichsbeispiel

In den nachfolgenden Tabellen gelten:
g AS/ha = Gramm Aktivsubstanz (= 100% Wirkstoff) pro Hektar; Erwartungswerte nach Colby sind jeweils in Klammern (E =...) angegeben;

Tabelle 13:

| Herbizide Wirkung und Selektivität in Reis (Feldversuch) | | | |
|---|---|---|---|
| Wirkstoff(e) | Dosis[1] g AS/ha | Herbizide Wirkung[2] (in %) an ECHCG | Schädigung[2] (in %) an Reis |
| (A1.1)[S] | 20 | 75 | 0 |
| (B2.4) | 37,5 | 0 | 0 |
| (A1.1)[S] + (B2.4) | 20 + 37,5 | 85 (E=75) | 0 |
| Abkürzungen zu Tabelle 13:<br>[1] = Applikation jeweils postemergent im 1-2-Blatt-Stadium<br>[2] = Bonitur 28Tage nach Applikation<br>(A1.1)[S]=Fenoxaprop-P-ethyl in Kombination mit dem Safener (S1-9),<br>(S1-9)=5,5-Diphenyl-2-isoxazolin-carbonsäureethylester<br>(B2.4)=Tritosulfuron<br>ECHCG=Echinochloa crus-galli | | | |

**Patentansprüche**

1. Herbizid-Kombination mit einem wirksamen Gehalt an Komponenten (A) und (B), wobei

   (A) ein Herbizid aus der Gruppe, bestehend aus Heteroaryloxyund Aryloxy-phenoxypropionsäuren und deren Salzen und Ester und Cyclohexandionen ausgewählt aus

   (A1.1) Fenoxaprop-P und dessen Ester und Fenoxaprop und dessen Ester,
   (A1.2) Quizalofop-P und dessen Ester und Quizalofop und dessen Ester,
   (A1.3) Propaquizafop,
   (A1.4) Fluazifop-P und dessen Ester und Fluazifop und dessen Butylester,
   (A1.6) Cyhalofop und dessen Ester,
   (A1.7) Clodinafop und dessen Ester
   (A2.2) Cycloxydim,
   (A2.3) Clethodim und
   (A2.4) Clefoxydim, bedeutet

   und
   (B) ein Herbizid aus der Gruppe der Verbindungen bedeutet, welche aus
   (B1) selektiv in Reis besonders gegen monokotyle Schadpflanzen wirksame Herbizide aus der Gruppe

   (B1.1) Butachlor und

   (B2) selektiv in Reis vorwiegend gegen dikotyle Schadpflanzen und Cyperaceen wirksame Herbizide aus der Gruppe

   (B2.3) Picloram und dessen Salze

   - wobei im Falle des Wirkstoffs (A1.3), (A1.4), (A1.6), (A2.2), (A2.3) oder (A2.4) als herbizider Kombinationswirkstoff der Gruppe (B2) auch

   (B2.9) Chlorimuron und dessen Ester,
   (B2.10) Triasulfuron und
   (B2.11) Ioxynil und dessen Ester und Salze
   in Frage kommen,

   besteht.

2. Herbizid-Kombination nach Anspruch 1, **dadurch gekennzeichnet, daß** als Komponente (A) ein Herbizid aus der Gruppe

   (A1.1) Fenoxaprop-P und dessen Ester und Fenoxaprop und dessen Ester,
   (A1.2) Quizalofop-P und dessen Ester und Quizalofop und dessen Ester,
   (A1.3) Propaquizafop,
   (A1.4) Fluazifop-P und dessen Ester und Fluazifop und dessen Butylester,
   (A1.6) Cyhalofop und dessen Ester und
   (A1.7) Clodinafop und dessen Ester

   enthalten sind.

3. Herbizid-Kombination nach Anspruch 1 oder 2, **dadurch gekennzeichnet, daß** als Komponente (A) Fenoxaprop-P-ethyl enthalten ist.

4. Herbizid-Kombination nach einem der Ansprüche 1 bis 3, **dadurch gekennzeichnet, daß** sie als Komponente (A) Fenoxaprop-P-ethyl oder Fenoxaprop-ethyl und als Komponente (B) einen Wirkstoffe aus der Gruppe (B1) und (B2), enthält, wobei

   (B1) selektiv in Reis besonders gegen monokotyle Schadpflanzen wirksame Herbizide aus der Gruppe

(B1.1) Butachlor,

bedeutet,

(B2) selektiv in Reis vorwiegend gegen dikotyle Schadpflanzen und Cyperaceen wirksame Herbizide aus der Gruppe
(B2.3) Picloram und dessen Salze

enthält

5.  Herbizid-Kombination nach Anspruch 1, **dadurch gekennzeichnet, daß** sie als Komponente (A) einen Wirkstoff aus der Gruppe

(A1.2) Quizalofop-P und dessen Ester und Quizalofop und dessen Ester,
(A1.3) Propaquizafop,
(A1.4) Fluazifop-P und dessen Ester und Fluazifop und dessen Butylester,
(A1.6) Cyhalofop und dessen Ester,
(A1.7) Clodinafop und dessen Ester
(A2.2)Cycloxydim,
(A2.3) Clethodim und
(A2.4) Clefoxydim, enthält

und als Komponente (B) einen Wirkstoff aus der Gruppe (B1) und (B2), enthält, wobei

(B1) selektiv in Reis besonders gegen monokotyle Schadpflanzen wirksame Herbizide aus der Gruppe

(B1.1) Butachlor,

bedeutet und
(B2) selektiv in Reis vorwiegend gegen dikotyle Schadpflanzen und Cyperaceen wirksame Herbizide aus der Gruppe

(B2.3) Picloram und dessen Salze

- wobei im Falle des Wirkstoffs (A1.3), (A1.4), (A1.6), (A2.2), (A2.3) oder (A2.4) als herbizider Kombinationswirkstoff der Gruppe (B2) auch

(B2.9) Chlorimuron und dessen Ester,
(B2.10) Triasulfuron und
(B2.11) Ioxynil und dessen Ester und Salze
in Frage kommen,

bedeutet.

6.  Herbizid-Kombinationen mit einem wirksamen Gehalt an Komponenten (A), (B) und (C), wobei die Komponenten

(A) Fenoxaprop-P-ethyl oder Fenoxaprop-ethyl,
(B) Butachlor und
(C) einen Safener aus der Gruppe enthaltend Safener vom Typ der Dichlorphenylpyrazolin-3-carbonsäuren, Dichlorphenylpyrazolcarbonsäuren, Triazolcarbonsäuren, 5-Benzyl- oder 5-Phenyl-2-isoxazolin-3-carbonsäuren und 8-Chinolinoxyessigsäuren

bedeuten.

7.  Herbizid-Kombinationen nach einem der Ansprüche 1 bis 6, **dadurch gekennzeichnet, daß** sie eine oder mehrere weitere Komponenten aus der Gruppe enthaltend Pflanzenschutzmittelwirkstoffe anderer Art, im Pflanzenschutz übliche Zusatzstoffe und Formulierungshilfsmittel enthalten.

8.  Verfahren zur Bekämpfung von Schadpflanzen **dadurch gekennzeichnet, daß** man die Herbizide der Herbizid-Kombination, definiert gemäß einem der Ansprüche 1 bis 6, gemeinsam oder getrennt im Vorauflauf, Nachauflauf oder im Vor- und Nachauflauf auf die Pflanzen, Pflanzenteile, Pflanzensamen oder die Anbaufläche appliziert.

9.  Verfahren nach Anspruch 8 zur selektiven Bekämpfung von Schadpflanzen in Pflanzenkulturen, vorzugsweise Reiskulturen.

10. Verwendung der nach einem der Ansprüche 1 bis 7 definierten Herbizid-Kombinationen zur Bekämpfung von Schadpflanzen, vorzugsweise in Reiskulturen.

**Claims**

1.  A herbicide combination having an effective content of components (A) and (B), where

    (A) is a herbicide selected from the group consisting of heteroaryloxy- and aryloxy-phenoxypropionic acids, their salts and esters and cyclohexanediones, selected from

    (A1.1) fenoxaprop-P and its esters and fenoxaprop and its esters,
    (A1.2) quizalofop-P and its esters and quizalofop and its esters,
    (A1.3) propaquizafop,
    (A1.4) fluazifop-P and its esters and fluazifop and its butyl ester,
    (A1.6) cyhalofop and its esters,
    (A1.7) clodinafop and its esters,
    (A2.2) cycloxydim,
    (A2.3) clethodim and
    (A2.4) clefoxydim,

    and
    (B) is a herbicide selected from the group of_ the compounds consisting of
    (B1) herbicides which are selectively active in rice, in particular against monocotyledonous harmful plants, selected from the group consisting of

    (B1.1) butachlor and

    (B2) herbicides which are selectively active in rice, mainly against dicotyledonous harmful plants and Cyperaceae, selected from the group consisting of

    (B2.3) picloram and its salts

    - where, in the case of the active compound (A1.3), (A1.4), (A1.6), (A2.2), (A2.3) or (A2.4), it is also possible to use

    (B2.9) chlorimuron and its esters,
    (B2.10) triasulfuron and
    (B2.11) ioxynil and its esters and salts
    as herbicidally active combination compound of the group (B2).

2.  The herbicide combination as claimed in claim 1 which comprises, as component (A), a herbicide selected from the group consisting of

    (A1.1) fenoxaprop-P and its esters and fenoxaprop and its esters,
    (A1.2) quizalofop-P and its esters and quizalofop and its esters,
    (A1.3) propaquizafop,
    (A1.4) fluazifop-P and its esters and fluazifop and its butyl ester,
    (A1.6) cyhalofop and its esters and
    (A1.7) clodinafop and its esters.

3. The herbicide combination as claimed in claim 1 or 2 which comprises, as component (A), fenoxaprop-P-ethyl.

4. The herbicide combination as claimed in any of claims 1 to 3 which comprises, as component (A), fenoxaprop-P-ethyl or fenoxaprop-ethyl and, as component (B), an active compound selected from the group consisting of (B1) and (B2) where

   (B1) is herbicides which are selectively active in rice, in particular against monocotyledonous harmful plants, selected from the group consisting of

   (B1.1) butachlor,

   (B2) comprises herbicides which are selectively active in rice, mainly against dicotyledonous harmful plants and Cyperaceae, selected from the group consisting of

   (B2.3) picloram and its salts.

5. The herbicide combination as claimed in claim 1 which comprises, as component (A), an active compound selected from the group consisting of

   (A1.2) quizalofop-P and its esters and quizalofop and its esters,
   (A1.3) propaquizafop,
   (A1.4) fluazifop-P, and its esters and fluazifop and its butyl ester,
   (A1.6) cyhalofop and its esters,
   (A1.7) clodinafop and its esters,
   (A2.2) cycloxydim,
   (A2.3) clethodim and
   (A2.4) clefoxydim

   and comprises, as component (B), an active compound selected from the group consisting of (B1) and (B2), where

   (B1) is herbicides which are selectively active in rice, in particular against monocotyledonous harmful plants, selected from the group consisting of

   (B1.1) butachlor

   and
   (B2) is herbicides which are selectively active in rice, mainly against dicotyledonous harmful plants and Cyperaceae, selected from the group consisting of

   (B2.3) picloram and its salts

       - where, in the case of the active compound (A1.3), (A1.4), (A1.6), (A2.2), (A2.3) or (A2.4), the herbicidally active combination compound of group (B2) may also be

   (B2.9) chlorimuron and its esters,
   (B2.10) triasulfuron and
   (B2.11) ioxynil and its esters and salts.

6. A herbicide combination having an effective content of components (A), (B) and (C), where the component

   (A) is fenoxaprop-P-ethyl or fenoxaprop-ethyl,
   (B) is butachlor and
   (C) is a safener from the group comprising safeners of the type of the dichlorophenylpyrazoline-3-carboxylic acids, dichlorophenylpyrazolecarboxylic acids, triazolecarboxylic acids, 5-benzyl- or 5-phenyl-2-isoxazoline-3-carboxylic acid and 8-quinolinoxyacetic acid.

7. The herbicide combination as claimed in any of claims 1 to 6 which comprises one or more other components selected from the group consisting of crop protection agents of a different kind, additives and formulation auxiliaries which are customary in crop protection.

8. A method for controlling harmful plants, which comprises applying the herbicides of the herbicide combination, defined according to any of claims 1 to 6, jointly or separately by the pre-emergence method, post-emergence method or the pre- and post-emergence method to the plants, parts of plants, plant seeds or the area under cultivation.

9. The method as claimed in claim 8 for the selective control of harmful plants in crops, preferably crops of rice.

10. The use of the herbicide combinations defined according to any of claims 1 to 7 for controlling harmful plants, preferably in crops of rice.

**Revendications**

1. Combinaison herbicide présentant une teneur efficace en composants (A) et (B), où

   (A) représente un herbicide pris dans le groupe comprenant les acides hétéroaryloxy- et aryloxy-phénoxypropioniques et leurs sels et esters, et des cyclohexanediones choisi parmi

      (A1.1) fenoxaprop-P et son ester et fenoxaprop et son ester,
      (A1.2) quizalofop-P et son ester et quizalofop et son ester,
      (A1.3) propaquizafop,
      (A1.4) fluazifop-P et son ester et fluazifop et son ester butylique,
      (A1.6) cyhalofop et son ester,
      (A1.7) clodinafop et son ester
      (A2.2) cycloxydim,
      (A2.3) clethodim et
      (A2.4) clefoxydim,

   et
   (B) représente un herbicide pris dans le groupe des composés comprenant
   (B1) les herbicides sélectivement efficaces dans le riz en particulier contre les plantes adventices monocotylédones, pris dans le groupe comprenant

      (B1.1) butachlor et

   (B2) les herbicides sélectivement efficaces dans le riz principalement contre les plantes adventices dicotylédones et les cypéracées, pris dans le groupe comprenant

      (B2.3) piclorame et ses sels
      où dans le cas de la matière active (A1.3), (A1.4), (A1.6), (A2.2), (A2.3) ou (A2.4) en tant que matière active de combinaison herbicide du groupe (B2) entrent également en ligne de compte
      (B2.9) chlorimuron et son ester,
      (B2.10) triasulfuron et
      (B2.11) ioxynil et ses esters et sels.

2. Combinaison herbicide selon la revendication 1, **caractérisée en ce qu'**elle renferme en tant que composant (A) un herbicide pris dans le groupe comprenant

      (A1.1) fenoxaprop-P et son ester et fenoxaprop et son ester,
      (A1.2) quizalofop-P et son ester et quizalofop et son ester,
      (A1.3) propaquizafop,
      (A1.4) fluazifop-P et son ester et fluazifop et son ester butylique,
      (A1.6) cyhalofop et son ester et
      (A1.7) clodinafop et son ester.

3. Combinaison herbicide selon la revendication 1 ou 2, **caractérisée en ce qu'**elle renferme en tant que composant (A) le fenoxaprop-P-ethyl.

4. Combinaison herbicide selon l'une des revendications 1 à 3, **caractérisée en ce qu'**elle renferme en tant que composant (A) fenoxaprop-P-ethyl ou fenoxaprop-ethyl, et en tant que composant (B) une matière active prise des groupes (B1) et (B2), où

(B1) représente les herbicides sélectivement efficaces dans le riz en particulier contre les plantes adventices monocotylédones du groupe comprenant

(B1.1) butachlor,

(B2) représente les herbicides sélectivement efficaces dans le riz principalement contre les plantes adventices dicotylédones et les cypéracées, pris dans le groupe comprenant

(B2.3) piclorame et ses sels.

5. Combinaison herbicide selon la revendication 1, **caractérisée en ce qu'**elle renferme en tant que composant (A) une matière active prise dans le groupe

(A1.2) quizalofop-P et son ester et quizalofop et son ester,
(A1.3) propaquizafop,
(A1.4) fluazifop-P et son ester et fluazifop et son ester butylique,
(A1.6) cyhalofop et son ester,
(A1.7) clodinafop et son ester,
(A2.2) cycloxydim,
(A2.3) clethodim et
(A2.4) clefoxydim,

et en tant que composant (B) une matière active prise dans les groupes (B1) et (B2) où

(B1) représente les herbicides sélectivement efficaces dans le riz en particulier contre les plantes adventices monocotylédones du groupe (B1.1) butachlor, et
(B2) représente les herbicides sélectivement efficaces dans le riz principalement contre les plantes adventices dicotylédones et les cypéracées du groupe comprenant

(B2.3) piclorame et ses sels
où dans le cas de la matière active (A1.3), (A1.4), (A1.6), (A2.2), (A2.3) ou (A2.4), entrent également en ligne de compte en tant que matière active herbicide de combinaison du groupe (B2)
(B2.9) chlorimuron et son ester,
(B2.10) triasulfuron et
(B2.11) ioxynil et ses esters et sels.

6. Combinaisons herbicides présentant une teneur efficace en composants (A), (B) et (C), les composants représentant

(A) fenoxaprop-P-ethyl ou fenoxaprop-ethyl,
(B) butachlor et
(C) un antidote pris dans le groupe comprenant des antidotes de type acides dichlorophényl-pyrazoline-3-carboxyliques, acides dichloro-phényl-pyrazolo-carboxyliques, acides triazolo-carboxyliques, acides 5-benzyl-ou 5-phényl-2-isoxazoline-3-carboxyliques et acides 8-quinoléinoxy-acétiques.

7. Combinaisons herbicides selon l'une des revendications 1 à 6, **caractérisées en ce qu'**elles renferment un ou plusieurs autres composants pris dans le groupe comprenant des matières actives phytosanitaires de type différent, des matières d'addition et agents de formulation usuels dans le domaine phytosanitaire.

8. Procédé pour la lutte contre les plantes adventices, **caractérisé en ce qu'**on applique les herbicides de la combinaison herbicide définie selon l'une des revendications 1 à 6, conjointement ou séparément en prélevée, en post-levée, ou en pré-levée et en post-levée aux plantes, aux parties de plantes, aux grains de plantes ou à la surface cultivable.

9. Procédé selon la revendication 8 pour la lutte sélective contre les plantes adventices dans les cultures végétales, de préférence dans les cultures de riz.

10. Utilisation des combinaisons herbicides définies selon l'une des revendications 1 à 7 dans la lutte contre les plantes adventices, de préférence dans les cultures de riz.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0043802 A
- GB 2137092 A
- WO 9105469 A
- WO 9107874 A
- EP 333131 A
- EP 269806 A
- EP 174562 A
- EP 346620 A
- WO 9108202 A
- WO 9507897 A
- EP 86750 A
- EP 94349 A
- EP 191736 A

- EP 0492366 A
- EP 0582198 A
- JP 60087254 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A

**In der Beschreibung aufgeführte Nicht-Patentliteratur**

- *AG Chem New Compound Review,* 1999, vol. 17, 26
- **Sambrook et al.** Molecular Cloning, A Laboratory Manual. Cold Spring Harbor Laboratory Press, 1989, vol. 2
- **Winnacker.** Gene und Klone. VCH Weinheim, 1996, vol. 2
- **Christou.** Trends in Plant Science. 1996, vol. 1, 423-431
- **Braun et al.** *EMBO J.,* 1992, vol. 11, 3219-3227
- **Wolter et al.** *Proc. Natl. Acad. Sci. USA,* 1988, vol. 85, 846-850
- **Sonnewald et al.** *Plant J.,* 1991, vol. 1, 95-106
- **Winnacker-Küchler.** Chemische Technologie. C. Hauser Verlag München, 1986, vol. 7

- **van Valkenburg.** Pesticides Formulations. Marcel Dekker N.Y, 1973
- **K. Martens.** Spray Drying Handbook. G. Goodwin Ltd, 1979
- **Watkins.** Handbook of Insecticide Dust Diluents and Carriers. Darland Books
- **H.v. Olphen.** Introduction to Clay Colloid Chemistry. J. Wiley & Sons
- **Marsden.** Solvents Guide. Interscience, 1950
- **McCutcheon's.** Detergents and Emulsifiers Annual. MC Publ. Corp,
- **Sisley ; Wood.** Encyclopedia of Surface Active Egents. Chem. Publ. Co. Inc, 1964
- **Schönfeldt.** Grenzflächenaktive Äthylenoxidaddukte. Wiss. Verlagsgesellschaft, 1976
- **S. R. Colby.** *Weeds,* 1967, vol. 15, 20-22